(19) Europäisches Patentamt / European Patent Office / Office européen des brevets

(11) **EP 2 978 617 B1**

(12) **FASCICULE DE BREVET EUROPEEN**

(45) Date de publication et mention
de la délivrance du brevet:
**09.08.2017 Bulletin 2017/32**

(21) Numéro de dépôt: **14713088.4**

(22) Date de dépôt: **26.03.2014**

(51) Int Cl.:
***B60G 17/016*** *(2006.01)*

(86) Numéro de dépôt international:
**PCT/EP2014/056011**

(87) Numéro de publication internationale:
**WO 2014/154724 (02.10.2014 Gazette 2014/40)**

(54) **PROCÉDÉ DE RÉDUCTION DU RISQUE DE BASCULEMENT D'UN VÉHICULE AUTOMOTEUR ÉQUIPÉ D'UN SYSTÈME DE SUSPENSION PILOTABLE**

VERFAHREN ZUR REDUZIERUNG DER UMKIPPGEFAHR EINES KRAFTFAHRZEUGS MIT EINEM STEUERBAREN AUFHÄNGUNGSSYSTEM

METHOD FOR REDUCING THE RISK OF ROLLOVER OF AN AUTOMOTIVE VEHICLE PROVIDED WITH A CONTROLLABLE SUSPENSION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2013 FR 1352736**

(43) Date de publication de la demande:
**03.02.2016 Bulletin 2016/05**

(73) Titulaires:
• **Université Blaise Pascal Clermont II**
 **63006 Clermont Ferrand Cedex 1 (FR)**
• **Institut National de Recherche en Sciences et Technologies pour l'Environnement et l'Agriculture**
 **(IRSTEA)**
 **92160 Antony (FR)**

(72) Inventeurs:
• **LENAIN, Roland**
 **F-63210 Saint Bonnet Pres Orcival (FR)**
• **BOUTON, Nicolas**
 **F-63170 Perignat Les Sarlieves (FR)**
• **RICHIER, Mathieu**
 **13500 Martigues (FR)**
• **DIEUMET, Denis**
 **F-63000 Clermont-Ferrand (FR)**
• **THUILOT, Benoît**
 **F-63400 Chamalieres (FR)**

(74) Mandataire: **Lavoix**
 **62, rue de Bonnel**
 **69448 Lyon Cedex 03 (FR)**

(56) Documents cités:
**US-A- 5 825 284          US-A1- 2002 056 582**
**US-A1- 2007 162 204**

• **JOOP PAUWELUSSEN ET AL: "Predict the road to prevent roll-over, using the navigation database", INTELLIGENT VEHICLES SYMPOSIUM, 2008 IEEE, IEEE, PISCATAWAY, NJ, USA, 4 juin 2008 (2008-06-04), pages 944-949, XP031318862, ISBN: 978-1-4244-2568-6**

**Description**

L'invention a pour domaine celui des procédés et des systèmes pour la gestion active de la sécurité d'utilisation d'un véhicule automoteur, afin d'éviter que ce dernier ne bascule lors de son utilisation.

Par véhicule automoteur, on entend dans le présent document, tout véhicule comportant un moyen de propulsion qui présente un risque de renversement latéral lors de son utilisation. Il s'agit par exemple d'un véhicule agricole utilisé sur un terrain en pente, et dont le chargement peut varier de manière importante, dont le conducteur peut modifier la hauteur du centre de gravité en actionnant un moyen de commande des suspensions actives.

L'invention est plus particulièrement relative à des procédés et des systèmes pour un véhicule automoteur équipé d'un système de suspension pilotable.

Par système de suspension pilotable, on entend dans le présent document, tout système permettant de modifier, à masse totale constante, la position du centre de gravité du véhicule. Il peut par exemple s'agir d'un système de correction d'assiette comportant des suspensions actives permettant de coupler les roues au châssis du véhicule. Une telle suspension active peut être hydraulique, pneumatique, électrique, etc.

Un tel système est par exemple décrit dans le document US 2002/056582 A1.

A partir des mesures effectuées par des capteurs adaptés du système de suspension pilotable, tels qu'une paire de capteurs de pression dans le cas d'une suspension active hydraulique, il est connu de déterminer l'état instantané du système de suspension pilotable et d'en déduire une grandeur mesurée représentative du risque de renversement. En fonction de la valeur instantanée de cette grandeur mesurée, une stratégie de sécurité est mise en oeuvre pour prévenir le conducteur ou les personnes situées à proximité du véhicule automoteur et/ou pour commander des actionneurs spécifiques du véhicule automoteur pour éviter un renversement de celui-ci (par exemple en modifiant la vitesse, l'angle de braquage, la hauteur du centre de gravité, etc.)

Cependant, les mesures effectuées au moyen des capteurs du système de suspension pilotable ne permettent pas, à tout instant, de déterminer l'état instantané du système de suspension pilotable. C'est par exemple le cas, lorsqu'une suspension active est dans l'état complètement rétracté ou que le conducteur modifie la hauteur du centre de gravité du véhicule automoteur. La grandeur mesurée n'est alors pas disponible. Cela peut durer quelques secondes, suffisantes pour que le risque de renversement ne soit plus contrôlé et que le véhicule bascule.

Les inventeurs ont alors cherché une alternative au calcul d'une grandeur mesurée représentative du risque de renversement.

Ils ont alors appliqué à un véhicule automoteur, les résultats qu'ils ont obtenus dans le cas d'un quad et qui sont rapportés dans l'article « Rollover prevention system dedicated to ATVs on natural ground ». Cet article divulgue un procédé permettant de calculer une grandeur estimée représentative du risque de renversement d'un quad. Le quad est équipé d'un système comportant une chaîne de traitement permettant l'acquisition de mesures cinématiques relatives au quad, puis leur traitement au moyen d'un modèle dynamique du comportement du quad, de manière à estimer une valeur instantanée de la grandeur estimée.

Les résultats de l'implémentation d'une telle chaîne de traitement sur une machine à vendanger en tant qu'exemple particulier de véhicule automoteur sont présentés dans l'article « Preserving stability of huge agriculture machines with internal mobilities : application to a grape harvester ». Cet article est dénommée Article II dans ce qui suit.

Cependant, les inventeurs ont constaté que la simple transcription de l'algorithme utilisé pour le cas du quad ne suffisait pas dans le cas d'un véhicule automoteur. En effet, dans ce cas, le modèle dynamique utilisé dans la chaîne de traitement dépend de paramètres, tels que la hauteur du centre de gravité et la masse totale du véhicule.

Ces deux paramètres variant de manière importante au cours de l'utilisation du véhicule automoteur (par exemple : utilisation de trémies, de cuves qui se vident ou se remplissent, etc.), le modèle dynamique évolue au cours du temps. De ce fait, un modèle dynamique dont les paramètres sont fixés en début de session conduit à une valeur instantanée de la grandeur estimée qui s'écarte de la valeur vraie. Elle ne peut donc pas servir en tant que variable sur laquelle fonder le fonctionnement d'un moyen de sécurité visant à éviter le basculement du véhicule automoteur.

L'invention a donc pour but de remédier à ce problème.

Pour cela, l'invention a pour objet un procédé de réduction du risque de basculement d'un véhicule automoteur comportant un système de suspension pilotable, caractérisé en ce qu'il comporte :

- une première étape de calcul, à partir d'une pluralité de signaux délivrés par des capteurs du système de suspension pilotable, d'une grandeur mesurée TCm en tant que valeur courante TC d'un transfert de charge ;

- une seconde étape de calcul d'une grandeur estimée TCe, à partir des signaux délivrés par des capteurs cinématiques placés à bord du véhicule et d'un modèle dynamique du véhicule, ladite grandeur estimée étant prise en tant que valeur courante du transfert de charge lorsque la grandeur mesurée n'est pas disponible ;

- une étape d'évaluation du risque de basculement à partir de la valeur courante TC du transfert de charge ; et, en cas de risque de basculement élevé,

- une étape d'émission d'un signal de sécurité.

Suivant des modes particuliers de réalisation, le procédé comporte une ou plusieurs des caractéristiques suivantes, prise(s) isolément ou suivant toutes les combinaisons techniquement possibles :

- lorsque la grandeur mesurée est disponible, le procédé comporte une étape de recalage d'au moins un paramètre du modèle dynamique du véhicule utilisé dans la seconde étape de calcul, ladite étape de recalage consistant à :

  - évaluer un écart entre la grandeur mesurée et la grandeur estimée; et, lorsque ledit écart est supérieur à une valeur seuil,
  - élaborer une loi d'évolution temporelle dudit paramètre, ladite loi tendant à réduire ledit écart ; et, lorsque la grandeur mesurée est disponible,
  - modifier, à chaque itération de la seconde étape de calcul, la valeur du paramètre du modèle dynamique du véhicule en utilisant la loi de variation.

- le paramètre du modèle dynamique M du véhicule est la masse G ou la hauteur du centre de gravité H.
- la loi d'évaluation temporelle pour la hauteur H du centre de gravité est donnée par une relation du type : $\Delta H = \gamma_H \dfrac{\delta TC}{\delta H} e(t)$, et la loi d'évaluation temporelle pour la masse G est donnée par une relation du type : $\Delta G = \gamma_G \dfrac{\delta TC}{\delta G} e(t)$, où $e(t)$ est l'écart, à l'instant courant, entre le transfert de charge mesuré TCm et le transfert de charge estimé TCe, $\dfrac{\delta TC(G)}{\delta G}$ est une variation en fonction de la masse G d'une relation connue TC(G) entre la masse et le transfert de charge ; $\dfrac{\delta TC(H)}{\delta H}$ est une variation en fonction de la hauteur H d'une relation connue TC(H) entre la hauteur et le transfert de charge, et $\gamma$ est un poids prédéterminé ou évaluer dynamiquement.
- le modèle dynamique du véhicule comportant deux paramètres, à savoir la masse et la hauteur du centre de gravité, le procédé comporte une étape de pondération des lois d'évolution temporelle de chacun de ces deux paramètres au moyen d'un coefficient résultant d'un calcul de vraisemblance de la cause du besoin de recalage.
- le système de suspension pilotable comportant des suspensions actives, la grandeur mesurée est calculée à partir des signaux représentatifs d'un effort généré par chacune des suspensions actives.
- la grandeur estimée est calculée à partir des signaux suivants :

  - une vitesse longitudinale, délivrée par un radar Doppler ;
  - un angle d'inclinaison longitudinal et un angle d'inclinaison transversal du véhicule, délivré par deux inclinomètres ;
  - une vitesse instantanée de rotation par rapport à un axe vertical, délivrée par une centrale inertielle ; et,
  - pour chaque roue, un angle de braquage, délivré par un capteur d'angle de roue.

- l'étape de recalage permet d'estimer indirectement la masse instantanée dudit véhicule.
- le signal de sécurité est pris en compte dans une étape d'actionnement d'un système pilotable de correction d'assiette, afin d'éviter le basculement du véhicule.
- le signal de sécurité est pris en compte dans une étape de régulation des moyens de propulsion et/ou de direction du véhicule, afin d'éviter le basculement du véhicule.

L'invention a également pour objet un support d'enregistrement d'informations, caractérisé en ce qu'il comporte des instructions pour l'exécution d'un procédé de réduction du risque de basculement d'un véhicule automoteur comportant un système de suspension pilotable, conforme au procédé précédent, lorsque les instructions sont exécutées par un calculateur électronique.

L'invention a également pour objet un système de réduction du risque de basculement d'un véhicule automoteur comportant un système de suspension pilotable, comportant un calculateur embarqué, caractérisé en ce que le calculateur embarqué est programmé pour exécuter un procédé conforme au procédé précédent.

De préférence, le système comporte :

- un radar Doppler propre à délivrer une vitesse longitudinale ;
- deux inclinomètres propres délivrer un angle d'inclinaison longitudinal et un angle d'inclinaison transversal du véhicule ;
- une centrale inertielle propre à délivrer une vitesse instantanée de rotation par rapport à un axe vertical ; et,
- pour chaque roue, un capteur de roue propre délivrer un angle de braquage.

L'invention a également pour objet un véhicule automoteur comportant un système de suspension pilotable, caractérisé en ce qu'il embarque un système de réduction du risque de basculement conforme au système précédent.

De préférence, le signal de sécurité généré en sortie du système est pris en compte par un module d'actionnement du système de suspension pilotable et/ou un module de régulation des moyens de propulsion et/ou de direction du véhicule, pour éviter le basculement du véhicule.

Ainsi, de manière avantageuse, pour le cas d'un véhicule automoteur équipé d'un système de suspension pilotable, l'invention résulte de l'utilisation d'une première chaîne pour le calcul d'une grandeur mesurée et d'une seconde chaîne pour le calcul d'une grandeur estimée, cette dernière étant utilisée à des fins de sécurité lorsque la grandeur calculée n'est pas disponible ; et, lorsque la grandeur mesurée est disponible, elle est utilisée non seulement à des fins de sécurité mais également pour recaler les paramètres du modèle dynamique dans le calcul de la grandeur estimée. De ce fait, la grandeur estimée est juste lorsque la grandeur mesurée n'est plus disponible.

L'invention et ses avantages seront mieux compris à la lecture de la description qui va suivre, donnée uniquement à titre d'exemple et faite en se référant aux dessins annexés sur lesquels :

- la figure 1 est une représentation schématique d'une machine à vendanger équipée de suspensions actives et d'un système pour la mise en oeuvre d'un procédé de réduction du risque de basculement de la machine ;
- la figure 2 est une représentation, sous forme de blocs, du système de la figure 1 ; et,
- la figure 3 est un graphe représentant, d'une part, la grandeur mesurée et, d'autre part, la grandeur estimée, avec et sans recalage des paramètres du modèle dynamique, obtenus en sortie du système de la figure 2 au cours d'une période d'utilisation de la machine de la figure 1.

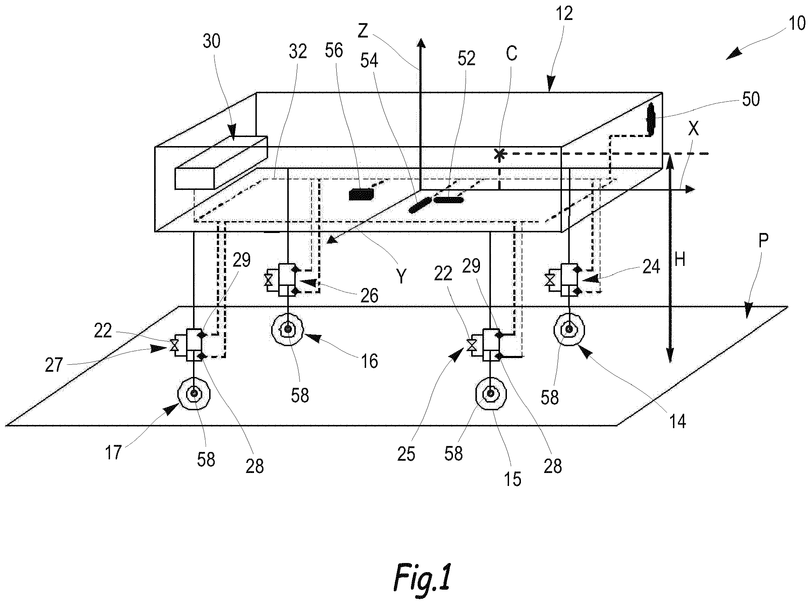

En se référant à la figure 1, une machine à vendanger 10 en tant qu'exemple de véhicule automoteur, se déplace sur un plan P sensiblement horizontal.

La machine 10 comporte une caisse 12 et quatre roues 14 à 17.

Comme pour tout véhicule, un repère XYZ est associé au centre géométrique de la caisse 12 : l'axe X est l'axe longitudinal, orienté vers l'avant de la caisse ; l'axe Y est l'axe transversal, orientant la caisse 12 de gauche à droite; et l'axe Z est un axe perpendiculaire aux axes X et Y, orienté vers le haut.

Le centre de gravité C se déplace au cours de l'utilisation de la machine 10, en fonction par exemple de son assiette et/ou de son état de chargement, c'est-à-dire de la masse totale G du véhicule. Sur la figure 1, le centre de gravité C est représenté comme reposant dans le plan XZ.

Chaque roue 14 à 17 est couplée à des moyens de propulsion (au sens large, c'est-à-dire de propulsion en traction, tels qu'un moteur, et de propulsion en freinage, tels qu'un moteur ou un ensemble de freins) et de direction (non représentés sur les figures).

Chaque roue 14 à 17 est reliée à la caisse 12 par l'intermédiaire d'une suspension active 24 à 27. Cet ensemble de suspensions actives appartient par exemple à un système pilotable de correction d'assiette, en tant qu'exemple de système de suspension pilotable.

Dans le cas particulier d'une suspension hydraulique, une suspension active comporte un piston propre à coulisser à l'intérieur d'une chambre principale d'un cylindre. Le piston subdivise la chambre principale en une chambre haute et une chambre basse.

Une vanne électromécanique bidirectionnelle 22 connecte la chambre haute à la chambre basse. L'effort généré par la suspension active dépend alors de l'état de la vanne. L'état de la vanne est commandé par l'application d'une consigne adaptée.

La différence des pressions entre la chambre haute et la chambre basse est indicative de l'état de la vanne. Ainsi, chaque suspension active comporte un premier capteur de pression 28 propre à générer un signal correspondant à la mesure de la pression dans la chambre basse et un second capteur de pression 29 propre à générer un signal correspondant à la mesure de la pression dans la chambre haute.

En variante, d'autres types de suspensions actives sont envisageables (en particulier, électriques ou pneumatiques) et d'autres types de capteurs peuvent être utilisés afin de permettre la détermination de l'état instantané de l'ensemble des suspensions.

Les signaux émis par les différents capteurs de pression sont transmis, via un réseau de communication 32 de la machine 10, tel que le réseau CANBus, à un calculateur embarqué 30.

Par ailleurs, la machine 10 est équipée de différents capteurs cinématiques. Dans le mode de réalisation actuellement envisagé, elle comporte :

- un radar Doppler 50 permettant de mesurer la vitesse linaire de déplacement de la machine le long de l'axe X ;
- un premier inclinomètre 52 permettant de mesurer l'angle entre l'axe X et un plan horizontal ;
- un second inclinomètre 54, permettant de déterminer l'angle entre l'axe Y et un plan horizontal ;
- une centrale inertielle 56, permettant de déterminer la vitesse de rotation instantanée de la machine autour de l'axe Z.

De préférence, chaque roue est équipée d'un capteur d'angle 58 permettant de mesurer l'angle de braquage de la roue.

Ces différents capteurs cinématiques 50 à 58 émettent des signaux de mesure à destination du calculateur 30, via le réseau 32.

Le calculateur 30 comporte un moyen de calcul, tel qu'un processeur, et des moyens de mémorisation, telle qu'une mémoire vive et une mémoire morte. Le processeur est propre à exécuter les instructions de programmes d'ordinateur, qui sont stockées dans la mémoire morte.

Parmi les programmes stockés dans les moyens de mémorisation, le calculateur 30 comporte un programme 100 d'évaluation du risque de basculement, qui va maintenant être décrit.

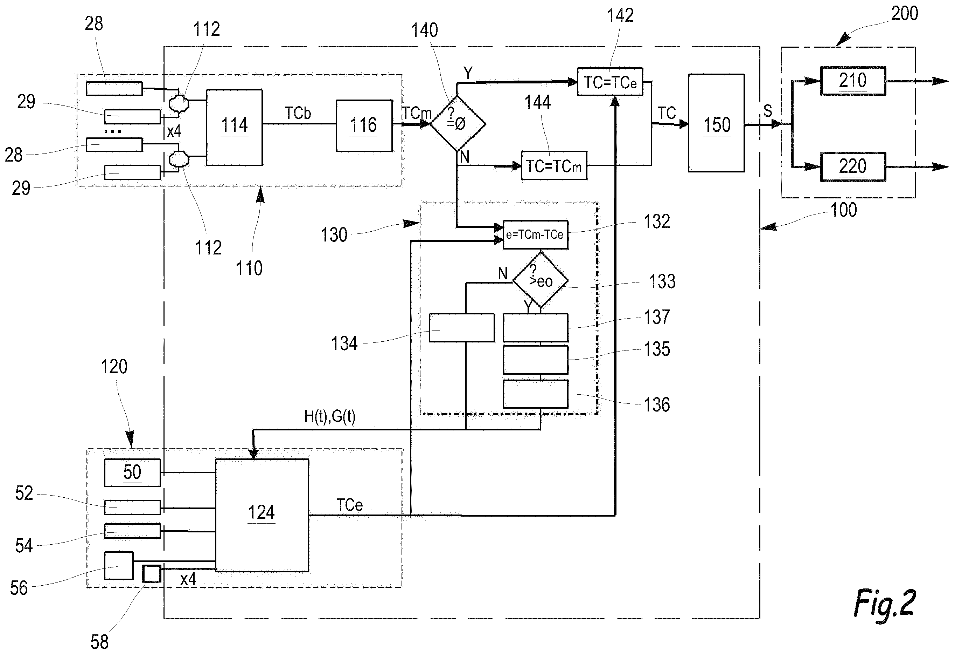

Comme représenté sur la figure 2, le système d'évaluation du risque de basculement comporte les capteurs de pression 28 et 29, les capteurs cinématiques 50 à 58 et le calculateur 30 programmé avec le programme 100.

Le programme 100 comporte une première chaîne de traitement 110, une seconde chaîne de traitement 120 et une chaîne de recalage 130.

La première chaîne de traitement 110 permet l'acquisition des signaux de mesure émis par les différents capteurs de pression 28 et 29 des suspensions actives 24 à 27.

Pour chaque paire de capteurs de pression d'une suspension active, un module de différence 112 permet de calculer une différence de pression indicative de l'état de la suspension active correspondante.

Les quatre différences de pression sont appliquées en entrée d'un module de calcul 114 propre à délivrer une valeur mesurée brute du transfert de charge TCb.

L'équation utilisée est l'équation (1) suivante :

$$TC_b = \frac{P_{14} - P_{15} + \alpha(P_{16} - P_{17})}{P_{14} + P_{15} + \alpha(P_{16} + P_{17})}$$

Où $\alpha$ est un coefficient représentatif de la différence structurelle entre les suspensions avant 24 et 25 et arrière 26 et 27 de la machine 10 ; $P_{14}$ est la différence de pression mesurée dans la suspension active de la roue avant gauche 14, $P_{15}$ celle dans la suspension de la roue avant droite, $P_{16}$ celle dans la suspension de la roue arrière gauche et $P_{17}$ celle dans la suspension de la roue arrière gauche.

Enfin, la première chaîne 110 comporte un module de vérification 116 prenant en entrée la valeur mesurée brute du transfert de charge TCb et délivrant en sortie une valeur mesurée du transfert de charge TCm. Le module 116 vérifie que la valeur mesurée brute se situe dans un domaine de validité. Dans l'affirmative, la valeur mesurée du transfert de charge TCm est égale à la valeur brute TCb. A défaut, la valeur mesurée du transfert de charge TCm est mise à zéro.

La seconde chaîne de traitement 120 permet l'acquisition des signaux de mesure émis par les différents capteurs cinématiques 50 à 58. Les signaux de mesure correspondant sont appliqués en entrée d'un module de calcul 124 propre à délivrer une valeur estimée du transfert de charge TCe.

Le module 124 met en oeuvre un modèle dynamique M du comportement de la machine 10. Ce modèle est décrit dans l'Article II cité précédemment.

Ce modèle dynamique M est paramétrique. Il dépend de la hauteur H du centre de gravité C par rapport à un plan moyen des roues 14 à 17 et de la masse totale G de la machine. Ces paramètres évoluent au cours du temps en fonction de l'utilisation de la machine 10.

Ainsi le module 124 prend en entrée, à chaque instant d'exécution, les valeurs instantanées de la masse G et de la hauteur H délivrées en sortie de la chaîne de recalage 130.

Le programme 100 comporte un module de comparaison 140 propre à comparer la valeur mesurée du transfert de charge TCm à la valeur nulle. Si la valeur mesurée du transfert de charge TCm n'est pas égale à zéro, cela signifie que la valeur mesurée est disponible. Alors le module 144 affecte la valeur mesurée du transfert de charge TCm à la valeur instantanée du transfert de charge TC.

A défaut, lorsque la valeur mesurée du transfert de charge TCm est égale à zéro, cela signifie que la valeur mesurée du transfert de charge TCm n'est pas disponible. Dans ce cas, le module 142 affecte la valeur estimée du transfert de charge TCe à la valeur instantanée du transfert de charge TC.

Le programme 100 comporte un module d'évaluation du risque de renversement 150 prenant en entrée la valeur instantanée du transfert de charge TC et délivrant en sortie un signal de sécurité S. Le signal S est par exemple émis lorsque la valeur instantanée du transfert de charge TC est supérieure, en valeur absolue, à 0,8.

La chaîne de recalage 130 permet, lorsque la valeur mesurée du transfert de charge TCm est disponible, de recaler les valeurs des paramètres H et G utilisées dans le modèle dynamique M de la seconde chaîne 120.

Pour cela, la chaîne de recalage 130 comporte un module de calcul d'écart 132 propre à calculer un écart instantané e(t), par différence entre la valeur mesurée TCm et la valeur estimée TCe du transfert de charge.

La chaîne 130 comporte un comparateur 133 permettant de déterminer si l'écart e(t) est supérieur à un écart seuil e0. Dans la négative, le module 134 affecte, en tant que valeurs instantanées de la masse G(t) et de la hauteur H(t) à l'instant courant t, les valeurs de la masse G(t-1) et de la hauteur H(t-1) à l'instant précédent t-1.

Dans l'affirmative, le module 135 de la chaîne 130 est exécuté. Le module 135 est propre à déterminer une variation de la masse ΔG ou de la hauteur ΔH en fonction d'une loi d'évolution temporelle. Dans le mode de réalisation actuellement préféré, cette loi s'exprime de la manière suivante :

$$\Delta H = \gamma_H \frac{\delta TC(H)}{\delta H} e(t)$$

$$\Delta G = \gamma_G \frac{\delta TC(G)}{\delta G} e(t)$$

Où $e(t)$ est l'écart, à l'instant courant, entre le transfert de charge mesuré TCm et le transfert de charge

estimé TCe, $\dfrac{\delta TC(G)}{\delta G}$ est la variation en fonction de la masse G d'une relation connue TC(G) entre la masse et le transfert de charge ; $\dfrac{\delta TC(H)}{\delta H}$ est la variation en fonction de la hauteur H d'une relation connue TC(H) entre la hauteur et le transfert de charge, et $\gamma$ un poids prédéterminé ou évalué dynamiquement comme cela sera présenté ci-après.

Le module 136 de la chaîne de recalage 130 est propre à affecter, en tant que valeurs instantanées de la masse G(t) et de la hauteur H(t) à l'instant courant t, les valeurs de la masse G(t-1) et de la hauteur H(t-1) à l'instant précédent t-1 augmentées de la variation de la masse $\Delta$G ou de la hauteur $\Delta$H déterminées par le module 135.

Les valeurs mises à jour des paramètres G et H sont appliquées en entrée du module 124.

En variante, la chaîne de recalage 130 comporte un module 137 de pondération des lois d'évolution temporelle de chacun des deux paramètres du modèle M, au moyen d'un coefficient $\gamma$ dont la valeur résulte d'un calcul de vraisemblance de la cause de l'écart entre TCm et TCe.

Le calculateur 30 comporte un programme 200 de réduction du risque de basculement propre à prendre en compte le signal S délivré en sortie du programme 100 d'évaluation de ce risque.

Le programme 200 comporte un module 210 d'actionnement du système pilotable de correction d'assiette du véhicule. Sur la base du signal S et éventuellement de la valeur courante du transfert de charge TC, le module 210 est propre à calculer différentes consignes pour des paramètres de pilotage des suspensions actives 24 à 27. Les consignes ainsi déterminées sont appliquées aux vannes des suspensions actives pour une prise en compte immédiate afin de modifier l'effort généré par chaque suspension et adapter la hauteur du centre de gravité (en particulier l'abaisser) dans le but d'éviter le basculement du véhicule.

Le programme 200 comporte un module 220 de régulation de la vitesse du véhicule. Sur la base du signal S et éventuellement de la valeur courante du transfert de charge TC, le module 220 est propre à calculer différentes consignes pour des paramètres de régulation des moyens de propulsion (régime du moteur, activation des freins, etc.) et/ou direction du véhicule (angle de braquage, etc.). Les consignes ainsi déterminées sont appliquées en entrée des moyens de propulsion et/ou de direction du véhicule pour une prise en compte immédiate afin de modifier la vitesse du véhicule (en particulier réduire son accélération transversale) dans le but d'éviter le basculement du véhicule.

Le procédé résultant de la mise en oeuvre du programme 100 précédent va maintenant être présenté.

A chaque exécution, les modules de la première chaîne de traitement 110 sont exécutés.

Après une étape d'acquisition des mesures effectuées par les différents capteurs de pression 28, 29 des suspensions actives 24 à 27, une différence de pression est calculée pour chaque paire de capteurs de pression d'une suspension active.

Les quatre différences de pression déterminées sont ensuite utilisées pour le calcul d'une valeur mesurée brute du transfert de charge TCb. Ce calcul est fondé sur l'équation (1) ci-dessus.

Enfin, au cours d'une étape de vérification, la valeur mesurée brute du transfert de charge TCb est comparée à un domaine de validité. Lorsque la valeur mesurée est dans ce domaine, la valeur mesurée du transfert de charge TCm est égale à la valeur brute TCb. Au contraire, lorsque la valeur mesurée est hors de ce domaine, la valeur mesurée du transfert de charge TCm est mise à zéro.

Parallèlement, les modules de la seconde chaîne 120 sont exécutés.

Après l'acquisition des mesures effectuées par les différents capteurs cinématiques 50 à 58, le module de calcul 124 est exécuté pour calculer une valeur estimée du transfert de charge TCe.

Le modèle dynamique M utilisé par le module 124 prend les valeurs de la masse G(t) et de la hauteur H(t) du centre de gravité à l'instant courant t.

L'exécution du programme 100 se poursuit par une étape de comparaison de la valeur mesurée du transfert de charge TCm à la valeur nulle. Si la valeur mesurée du transfert de charge TCm n'est pas égale à zéro cela signifie que la valeur mesurée est disponible. Alors le module 144 est exécuté de manière à affecter la valeur mesurée du transfert de charge TCm à la valeur instantanée du transfert de charge TC.

A défaut, lorsque la valeur mesurée du transfert de charge TCm est égale à zéro cela signifie que la valeur mesurée du transfert de charge TCm n'est pas disponible. Dans ce cas, le module 142 est exécuté de manière à affecter la valeur estimée du transfert de charge TCe à la valeur instantanée du transfert de charge TC.

A l'étape suivante, le module 150 est exécuté pour déterminer, à partir de la valeur courante du transfert de charge TC s'il y a un risque de basculement. Si la valeur instantanée du transfert de charge TC est, en valeur absolue, supérieure à 0,8, il y a risque de basculement. Un signal de sécurité S est alors émis.

A chaque cycle d'exécution des modules des première et seconde chaînes de traitement 110 et 120, et lorsque la valeur mesurée du transfert de charge TCm est disponible, les modules de la chaîne de recalage 130 sont exécutés pour recaler la valeur des paramètres H et G utilisés dans le modèle dynamique M.

Pour cela, une étape de calcul conduit à la détermination d'un écart par différence entre la valeur mesurée TCm et la valeur estimée TCe du transfert de charge.

Puis, l'écart e(t) ainsi obtenu est comparé à un écart seuil e0. Si l'écart est plus faible que le seuil, le module 134 est exécuté de manière à affecter en tant que valeurs de la masse G(t) et de la hauteur H(t) à l'instant courant t, les valeurs de la masse G(t-1) et de la hauteur H(t-1) à l'instant précédent t-1.

Si en revanche, l'écart est plus grand que le seuil, le module 135 est exécuté de manière à déterminer une variation de la masse ou de la hauteur en fonction d'une loi d'évolution temporelle.

Puis, à l'étape suivante, le module 136 est exécuté pour affecter en tant que valeurs de la masse G(t) et de la hauteur H(t) à l'instant courant t les valeurs de la masse G(t-1) et de la hauteur H(t-1) à l'instant précédent t-1 augmentées de la variation de la masse ou de la hauteur déterminées par le module 135.

Les valeurs mises à jour des paramètres G et H sont disponibles pour la prochaine exécution du module 124.

En variante, une étape supplémentaire permet la pondération des lois d'évolution temporelle de chacun des deux paramètres au moyen d'un coefficient résultant d'un calcul de vraisemblance de la cause du besoin de recalage.

De cette manière, le modèle dynamique M est mis à jour pour décrire effectivement le comportement de la machine.

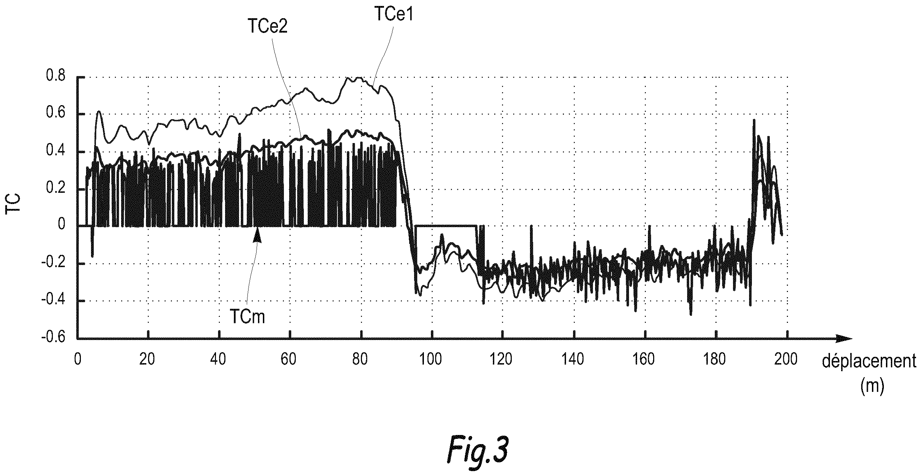

C'est ce qui est représenté sur la figure 3. Celle-ci représente, sous forme d'un graphe, les résultats de la mise en oeuvre du présent procédé lors d'un déplacement aller-retour de 200 m, effectué à une vitesse de 1,5 m/s, selon une trajectoire sensiblement rectiligne selon une direction perpendiculaire à la pente d'environ 15° du terrain.

On a représenté le graphe de la valeur mesurée du transfert de charge TCm en fonction du temps. Dans la partie gauche de ce graphe, les suspensions actives reviennent souvent en butée. TCm est par conséquent souvent indisponible (forme en dents de scie du signal, car TCm vaut souvent 0).

Dans la partie centrale, entre environ 90 m et 110 m, la machine à vendanger effectue un demi-tour. L'opérateur bloque volontairement le système de correction d'assiette de sorte que TCm est totalement indisponible (TCM=0).

Enfin dans la partie droite, sur le chemin retour, les suspensions actives sont réglées à une autre valeur que celle de l'allée, de sorte qu'elles reviennent moins souvent en butée. TCm est disponible pratiquement à chaque instant.

On a également représenté le graphe TCe1 de la valeur estimée du transfert de charge mais sans mise en oeuvre de l'étape de recalage des paramètres du modèle dynamique. Cette valeur estimée est loin de la valeur mesurée lorsque celle-ci est disponible. Elle ne peut donc servir pour l'évaluation du risque de basculement lorsque la valeur mesurée n'est pas disponible.

On a également représenté le graphe TCe2 de la valeur estimée du transfert de charge avec mise en oeuvre de l'étape de recalage des paramètres du modèle dynamique. Cette valeur estimée est très proche de la valeur mesurée et suit ses variations. Elle peut donc être utilisée comme grandeur représentative du risque de basculement lorsque la valeur mesurée n'est pas disponible.

On notera que l'on obtient, de manière indirecte, une valeur instantanée G(t) de la masse totale du véhicule. Cette information peut avantageusement être reprise par d'autres systèmes équipant le véhicule de sorte que leurs fonctionnements peut être optimisés, en temps réel, en se fondant sur une valeur vraie de la masse du véhicule.

Le signal de sécurité S est pris en compte par d'autres programmes exécutés sur le calculateur 30, tels que le programme 200 de réduction du risque de basculement.

Ainsi, l'exécution du module 210 d'actionnement du système pilotable de correction d'assiette du véhicule calcule différentes consignes destinées à être appliquées aux suspensions actives pour réduire par exemple la hauteur du centre de gravité.

Ainsi, l'exécution du module 220 de régulation de la vitesse du véhicule calcule différentes consignes pour des paramètres de régulation des moyens de propulsion et/ou de direction du véhicule. Les consignes ainsi déterminées sont appliquées en entrée de ces moyens afin de réduire par exemple l'accélération transversale du véhicule.

Avantageusement, l'exécution du programme 200 prévoit un arbitrage conduisant à une répartition de la réduction du risque de renversement entre l'actionnement du système de correction d'assiette et celui des moyens de propulsion et/ou de direction.

## Revendications

1. Procédé de réduction du risque de basculement d'un véhicule automoteur (10) comportant un système de suspension pilotable (24-27), **caractérisé en ce qu'**il comporte :

   - une première étape de calcul, à partir d'une pluralité de signaux délivrés par des capteurs (28, 29) du système de suspension pilotable, d'une grandeur mesurée (TCm) en tant que valeur courante (TC) d'un transfert de charge ;
   - une seconde étape de calcul d'une grandeur estimée (TCe), à partir des signaux délivrés par des capteurs cinématiques (50-58) placés à bord du véhicule (10) et d'un modèle dynamique (M) du véhicule, ladite grandeur estimée étant prise en tant que valeur courante du transfert de charge lorsque la grandeur mesurée n'est pas disponible ;
   - une étape d'évaluation du risque de basculement à partir de la valeur courante (TC) du transfert de charge ; et, en cas de risque de basculement élevé,
- une étape d'émission d'un signal de sécurité (S).

2. Procédé selon la revendication 1, dans lequel, lorsque la grandeur mesurée (TCm) est disponible, le procédé comporte une étape de recalage d'au moins un paramètre (H, G) du modèle dynamique (M) du véhicule utilisé dans la seconde étape de calcul, ladite étape de recalage consistant à :

- évaluer un écart entre la grandeur mesurée (TCm) et la grandeur estimée (TCe) ; et, lorsque ledit écart est supérieur à une valeur seuil (e0),
- élaborer une loi d'évolution temporelle dudit paramètre, ladite loi tendant à réduire ledit écart ; et, lorsque la grandeur mesurée (TCm) est disponible,
- modifier, à chaque itération de la seconde étape de calcul, la valeur du paramètre du modèle dynamique du véhicule en utilisant la loi de variation.

3. Procédé selon la revendication 2, dans lequel ledit au moins un paramètre du modèle dynamique (M) du véhicule (10) est la masse (G) ou la hauteur du centre de gravité (H).

4. Procédé selon la revendication 3, dans lequel la loi d'évaluation temporelle pour la hauteur H du centre de gravité est donnée par une relation du type :

$$\Delta H = \gamma_H \frac{\delta TC(H)}{\delta H} e(t),$$

et la loi d'évaluation temporelle pour la masse G est donnée par une relation du type :
$\Delta G = \gamma_G \dfrac{\delta TC(G)}{\delta G} e(t)$, où $e(t)$ est l'écart, à l'instant courant, entre le transfert de charge mesuré TCm et le transfert de charge estimé TCe, $\dfrac{\delta TC(G)}{\delta G}$ est une variation en fonction de la masse G d'une relation connue TC(G) entre la masse et le transfert de charge ; $\dfrac{\delta TC(H)}{\delta H}$ est une variation en fonction de la hauteur H d'une relation connue TC(H) entre la hauteur et le transfert de charge ; $\gamma_H$ est un poids prédéterminé ou évalué dynamiquement ; et; $\gamma_G$ est un poids prédéterminé ou évalué dynamiquement.

5. Procédé selon la revendication 4, dans lequel, le modèle dynamique (M) du véhicule (10) comportant deux paramètres, à savoir la masse (G) et la hauteur du centre de gravité (H), le procédé comporte une étape de pondération des lois d'évolution temporelle de chacun de ces deux paramètres au moyen d'un coefficient résultant d'un calcul de vraisemblance de la cause du besoin de recalage.

6. Procédé selon l'une quelconque des revendications précédentes, dans lequel, ledit système de suspension pilotable comportant des suspensions actives, la grandeur mesurée (TCm) est calculée à partir des signaux représentatifs d'un effort généré par chacune des suspensions actives (24-27).

7. Procédé selon l'une quelconque des revendications précédentes, dans lequel la grandeur estimée (TCe) est calculée à partir des signaux suivants :

- une vitesse longitudinale, délivrée par un radar Doppler (50) ;
- un angle d'inclinaison longitudinal et un angle d'inclinaison transversal du véhicule, délivré par deux inclinomètres (52, 54) ;
- une vitesse instantanée de rotation par rapport à un axe vertical, délivrée par une centrale inertielle (56) ; et,
- pour chaque roue, un angle de braquage, délivré par un capteur d'angle de roue (58).

8. Procédé selon l'une quelconque des revendications précédentes, dans lequel l'étape de recalage permet d'estimer indirectement la masse instantanée (G(t)) dudit véhicule.

9. Procédé selon l'une quelconque des revendications précédentes, dans lequel ledit signal de sécurité (S) est pris en compte dans une étape d'actionnement d'un système pilotable de correction d'assiette, afin d'éviter le basculement du véhicule.

10. Procédé selon l'une quelconque des revendications précédentes, dans lequel ledit signal de sécurité (S) est pris en compte dans une étape de régulation des moyens de propulsion et/ou de direction du véhicule, afin d'éviter le basculement du véhicule.

11. Support d'enregistrement d'informations, **caractérisé en ce qu'**il comporte des instructions pour l'exécution d'un procédé de réduction du risque de basculement d'un véhicule automoteur comportant un système de suspension pilotable, conforme à l'une quelconque des revendications 1 à 10, lorsque lesdites instructions sont exécutées par un calculateur électronique (30).

12. Système de réduction du risque de basculement d'un véhicule automoteur (10) comportant un système de suspension pilotable (24-27), comportant un calculateur embarqué (30), **caractérisé en ce que** le calculateur embarqué est programmé pour exécuter un procédé conforme à l'une quelconque des revendications 1 à 10.

13. Système selon la revendication 12, comportant :

   - un radar Doppler (50) propre à délivrer une vitesse longitudinale ;
   - deux inclinomètres (52, 54) propres délivrer un angle d'inclinaison longitudinal et un angle d'inclinaison transversal du véhicule ;
   - une centrale inertielle (56) propre à délivrer une vitesse instantanée de rotation par rapport à un axe vertical ; et,
   - pour chaque roue, un capteur de roue (58) propre délivrer un angle de braquage.

14. Véhicule automoteur comportant un système de suspension pilotable, **caractérisé en ce qu'**il embarque un système de réduction du risque de basculement conforme à l'une quelconque des revendications 12 et 13.

15. Véhicule selon la revendication 14, dans lequel ledit signal de sécurité (S) généré en sortie du système est pris en compte par un module (210) d'actionnement du système de suspension pilotable et/ou un module (220) de régulation des moyens de propulsion et/ou de direction du véhicule, pour éviter le basculement du véhicule.

**Patentansprüche**

1. Verfahren zur Verringerung der Gefahr des Kippens eines motorgetriebenen Fahrzeugs (10), das ein steuerbares Aufhängungssystem (24 - 27) aufweist, **dadurch gekennzeichnet, dass** es umfasst:

   - einen ersten Schritt des Berechnens einer gemessenen Größe (TCm) als aktuellen Wert (TC) einer Lastübertragung aus einer Mehrzahl von Signalen, die von den Sensoren (28, 29) des steuerbaren Aufhängungssystems geliefert werden;
   - einen zweiten Schritt des Berechnens einer geschätzten Größe (TCe) aus Signalen, die von an dem Fahrzeug (10) platzierten kinematischen Sensoren geliefert werden, und einem dynamischen Modell (M) des Fahrzeugs, wobei die geschätzte Größe als aktueller Wert der Lastübertragung genommen wird, wenn die gemessene Größe nicht verfügbar ist;
   - einen Schritt der Bewertung der Gefahr des Kippens aus dem aktuellen Wert (TC) der Lastübertragung und im Fall einer erhöhten Gefahr des Kippens,
   - einen Schritt des Abgebens eines Sicherheitssignals (S).

2. Verfahren nach Anspruch 1, bei dem, wenn die gemessene Größe (TCm) verfügbar ist, das Verfahren einen Schritt der Neueinstellung mindestens eines Parameters (HG) des dynamischen Modells (M) des Fahrzeugs, das in dem zweiten Schritt des Berechnens verwendet wird, aufweist, wobei der Schritt der Neueinstellung darin besteht:

   - eine Abweichung zwischen der gemessenen Größe (TCm) und der geschätzten Größe (TCe) auszuwerten; und wenn die Abweichung größer ist als ein Schwellenwert (e0),
   - ein Gesetz der zeitlichen Entwicklung des Parameters zu erarbeiten, wobei das Gesetz die Abweichung zu verringern versucht; und wenn die gemessene Größe (TCm) verfügbar ist,
   - bei jeder Iteration des zweiten Berechnungsschritts den Wert des Parameters des dynamischen Modells des Fahrzeugs zu modifizieren, indem das Variationsgesetz verwendet wird.

3. Verfahren nach Anspruch 2, bei dem der mindestens eine Parameter des dynamischen Modells (M) des Fahrzeugs (10) die Masse (G) oder die Höhe (H) des Gravitätszentrums ist.

4. Verfahren nach Anspruch 3, bei dem das Gesetz der zeitlichen Entwicklung für die Höhe (H) des Gravitationszentrums gegeben ist durch eine Beziehung des Typs:

$$\Delta H = \gamma_H \frac{\delta TC(H)}{\delta H} e(t),$$

und das Gesetz der zeitlichen Entwicklung für die Masse G gegeben ist durch eine Beziehung des Typs: $\Delta G = \gamma_G \frac{\delta TC(G)}{\delta G} e(t)$, wobei e(t) die Abweichung zwischen der gemessenen Lastverschiebung TCm und der geschätzten Lastverschiebung TCe ist, $\frac{\delta TC(G)}{\delta G}$ eine Änderung abhängig von der Masse G einer bekannten Beziehung TC(G) zwischen der Masse und der Lastverschiebung; $\frac{\delta TC(H)}{\delta H}$ eine Änderung abhängig von der Höhe H einer bekannten Beziehung TC(H) zwischen der Höhe und der Lastübertragung ist; $\gamma_H$ ein vorgege-

benes oder dynamisch ermitteltes Gewicht ist, und $\gamma_G$ ein vorbestimmtes oder dynamisch ermitteltes Gewicht ist.

**5.** Verfahren nach Anspruch 4, bei dem das dynamische Modell (M) des Fahrzeugs (10) zwei Parameter, nämlich die Masse (G) und die Höhe des Gravitationszentrums (H) aufweist und das Verfahren einen Schritt der Gewichtung der Gesetze der zeitlichen Entwicklung jedes dieser zwei Parameter mittels eines Koeffizienten, der aus einer Berechnung der Wahrscheinlichkeit des Grundes der Notwendigkeit der Neueinstellung resultiert, aufweist.

**6.** Verfahren nach einem beliebigen der vorhergehenden Ansprüche, bei dem das steuerbare Aufhängungssystem aktive Aufhängungen aufweist und die gemessene Größe (TCm) aus den Signalen berechnet wird, die für eine von jeder der aktiven Aufhängungen (24 - 27) erzeugten Kraft repräsentativ sind.

**7.** Verfahren nach einem beliebigen der vorhergehenden Ansprüche, bei dem die geschätzte Größe (TCe) aus den folgenden Signalen berechnet wird:

- einer von einem Dopplerradar (50) gelieferten Längsgeschwindigkeit;
- einem Längsneigungswinkel und einem Querneigungswinkel des Fahrzeugs, die von zwei Neigungssensoren (52, 54) geliefert werden;
- einer Momentandrehgeschwindigkeit in Bezug auf eine vertikale Achse, die von einem Trägheitssystem (56) geliefert wird; und
- einem Einschlagwinkel für jedes Rad, der von einem Winkelsensor (58) des Rades geliefert wird.

**8.** Verfahren nach einem beliebigen der vorhergehenden Ansprüche, bei dem der Schritt der Neueinstellung indirekt die Schätzung der momentanen Masse (G(t)) des Fahrzeugs gestattet.

**9.** Verfahren nach einem beliebigen der vorhergehenden Ansprüche, bei dem das Sicherheitssignal (S) in einem Schritt der Betätigung eines steuerbaren Systems zur Niveauregulierung berücksichtigt wird, um das Kippen des Fahrzeugs zu vermeiden.

**10.** Verfahren nach einem beliebigen der vorhergehenden Ansprüche, bei dem das Sicherheitssignal (S) bei einem Schritt der Einstellung der Antriebsmittel und/oder der Richtungsmittel des Fahrzeugs berücksichtigt wird, um das Kippen des Fahrzeugs zu vermeiden.

**11.** Informationsaufzeichnungsträger, **dadurch gekennzeichnet, dass** er Befehle für die Ausführung eines Verfahrens zur Verringerung der Gefahr des Kippens eines motorgetriebenen Fahrzeugs, das ein steuerbares Aufhängungssystem aufweist, nach einem beliebigen der Ansprüche 1 bis 10 aufweist, wenn die Befehle durch einen elektronischen Rechner (30) ausgeführt werden.

**12.** System zur Verringerung der Gefahr des Kippens eines ein steuerbares Aufhängungssystem (24-27) aufweisenden, motorbetriebenen Fahrzeugs (10), das einen mitgeführten Rechner (30) aufweist, **dadurch gekennzeichnet, dass** der mitgeführte Rechner programmiert ist, um ein Verfahren nach einem beliebigen der Ansprüche 1 bis 10 auszuführen.

**13.** System nach Anspruch 12, umfassend:

- ein Dopplerradar (50), das geeignet ist, eine Längsgeschwindigkeit zu liefern;
- zwei Neigungssensoren (52, 54), die geeignet sind, einen Längsneigungswinkel und einen Querneigungswinkel des Fahrzeugs zu liefern;
- ein Trägheitssystem (56), das geeignet ist, eine momentane Drehgeschwindigkeit in Bezug auf eine vertikale Achse zu liefern; und
- für jedes Rad einen Radsensor (58), der geeignet ist, einen Einschlagwinkel zu liefern.

**14.** Motorbetriebenes Fahrzeug, das ein steuerbares Aufhängungssystem aufweist, **dadurch gekennzeichnet, dass** es ein System zur Verringerung der Gefahr des Kippens nach einem beliebigen der Ansprüche 12 und 13 mitführt.

**15.** Fahrzeug nach Anspruch 14, bei dem das Sicherheitssignal (S), das am Ausgang des Systems geliefert wird, von einem Modul (210) der Betätigung eines steuerbaren Aufhängungssystems und/oder einem Modul (220) zur Einstellung von Antriebsmitteln und/oder Richtungsmitteln des Fahrzeugs berücksichtigt wird, um das Kippen des Fahrzeugs zu vermeiden.

**Claims**

**1.** A method for reducing the rollover risk of an automotive vehicle (10) including a controllable suspension system (24-27), **characterized in that** it includes:

- a first step of calculating, on the basis of a plurality of signals delivered by sensors (28, 29) of the controllable suspension system, a measured quantity (TCm) as an active value (TC) of a load transfer;
- a second step of calculating an estimated quantity (TCe), on the basis of signals delivered by kinematic sensors (50-58) placed onboard the vehicle (10) and a dynamic model (M) of the vehicle, said estimated quantity being taken as an active value of the load transfer when the measured quantity is not available;
- a step of evaluating the rollover risk on the basis of the active value (TC) of the load transfer; and, in the event of increased rollover risk,
- a step of the emission of a safety signal (S).

2. The method according to claim 1, wherein, when the measured quantity (TCm) is available, the method includes a step for recalibrating at least one parameter (H, G) of the dynamic model (M) of the vehicle used in the second calculation step, said recalibration step consisting of:

- evaluating a deviation between the measured quantity (TCm) and the estimated quantity (TCe); and, when said deviation exceeds a threshold value (e0),
- developing a law of evolution over time of said parameter, said law tending to reduce the deviation; and, when the measured quantity (TCm) is available,
- modifying, upon each iteration of the second calculation step, the parameter of the dynamic model of the vehicle by using the variation law.

3. The method according to claim 2, wherein said at least one parameter of the dynamic model (M) of the vehicle (10) is the mass (G) or the height of the center of gravity (H).

4. The method according to claim 3, wherein the time evaluation law for the height H of the center of gravity is given by a relationship of the type:

$$\Delta H = \gamma_H \frac{\delta TC}{\delta H} e(t),$$ and the time evaluation law for the mass G is given by a relationship of the type:

$$\Delta G = \gamma_G \frac{\delta TC}{\delta G} e(t),$$

where $e(t)$ is the deviation, at the current moment, between the measured load transfer TCm and the estimated load transfer TCe, $\dfrac{\delta TC(G)}{\delta G}$ is a variation as a function of the mass G of a known relationship TC(G) between the mass and the load transfer;

$\dfrac{\delta TC(H)}{\delta H}$ is a variation as a function of the height H of a known relationship TC(H) between the height and the load transfer, and $\gamma$ is a predetermined or dynamically evaluated weight.

5. The method according to claim 4, wherein, the dynamic model (M) of the vehicle (10) including two parameters, i.e., the mass (G) and the height of the center of gravity (H), the method includes a step for weighting the time evolution laws of each of those two parameters using a coefficient resulting from a likelihood calculation of the cause of the need for recalibration.

6. The method according to any one of the preceding claims, wherein, the controllable suspension system including active suspensions, the measured quantity (TCm) is calculated from signals representative of a force generated by each of the active suspensions (24-27).

7. The method according to any one of the preceding claims, wherein the estimated quantity (TCe) is calculated from the following signals:

- a longitudinal speed, delivered by a Doppler radar (50);
- a longitudinal incline angle and a transverse incline angle of the vehicle, delivered by two inclinometers (52, 54);
- an instantaneous speed of rotation relative to a vertical axis, delivered by an inertial unit (56); and
- for each wheel, a turning angle, delivered by a wheel angle sensor (58).

8. The method according to any one of the preceding claims, wherein the recalibration step makes it possible to indirectly estimate the instantaneous mass (G(t)) of said vehicle.

9. The method according to any one of the preceding claims, wherein the safety signal (S) is taken into account in an actuating step of a controllable attitude correction system, so as to avoid rollover of the vehicle.

10. The method according to any one of the preceding claims, wherein the safety signal (S) is taken into account in a step for regulating the propulsion and/or steering means of the vehicle, so as to prevent rollover of the vehicle.

11. An information recording medium, **characterized in that** it includes instructions for carrying out a method for reducing the rollover risk of an automotive vehicle including a controllable suspension system, according to any one of claims 1 to 10, when the instructions are executed by an electronic computer (30).

**12.** A system for reducing the rollover risk of an automotive vehicle (10) including a controllable suspension system (24-27), including an onboard computer (30), **characterized in that** the onboard computer is programmed to execute a method according to any one of claims 1 to 10.

**13.** The system according to claim 12, including:

- a Doppler radar (50) able to deliver a longitudinal speed;
- two inclinometers (52, 54) able to deliver a longitudinal incline angle and a transverse incline angle of the vehicle;
- an inertial unit (56) able to deliver an instantaneous speed of rotation relative to a vertical axis; and
- for each wheel, a wheel sensor (58) able to deliver a turning angle.

**14.** An automotive vehicle including a controllable suspension system, **characterized in that** it has an onboard system for reducing the rollover risk according to any one of claims 12 and 13.

**15.** The vehicle according to claim 14, wherein said safety signal (S) generated at the output of the system is taken into account by an actuating module (210) of the controllable suspension system and/or a regulating module (220) of the propulsion and/or steering means of the vehicle, to avoid rollover of the vehicle.

*Fig.1*

EP 2 978 617 B1

Fig.2

EP 2 978 617 B1

14

*Fig.3*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2002056582 A1